# EUROPEAN PATENT SPECIFICATION

(11) **EP 3 478 111 B1**
(45) Date of publication and mention of the grant of the patent: **07.10.2020**
(21) Application number: 17740640.2
(22) Date of filing: 30.06.2017
(51) Int. Cl.: A42B 3/12, A41D 13/015, A63B 71/10, B60R 21/04

(54) **ANISOTROPIC COMPOSITE STRUCTURE AND LINER COMPRISING SUCH A STRUCTURE AND USE OF AND METHOD OF PRODUCING SUCH A STRUCTURE**
ANISOTROPE VERBUNDSTRUKTUR UND AUSKLEIDUNG MIT SOLCH EINER STRUKTUR SOWIE VERWENDUNG VON UND VERFAHREN ZUR HERSTELLUNG SOLCH EINER STRUKTUR
STRUCTURE COMPOSITE ANISOTROPE ET DOUBLURE COMPORTANT UNE TELLE STRUCTURE, UTILISATION ET PROCÉDÉ DE FABRICATION D'UNE TELLE STRUCTURE

(30) Priority: 30.06.2016 GB 201611459; 07.12.2016 GB 201620806; 07.12.2016 GB 201620807
(43) Date of publication of application: 08.05.2019
(73) Proprietor: Katholieke Universiteit Leuven, 3000 Leuven (BE)
(72) Inventor: IVENS, Jan, 2870 Puurs (BE); MOSLEH, Yasmine, 6228 GV Maastricht (NL)
(74) Representative: DenK iP
(86) International application number: PCT/EP2017/066233
(87) International publication number: WO 2018/002283

(56) References cited:
- US-A- 4 290 149
- US-A- 4 345 338
- US-A1- 2003 200 677
- US-A1- 2014 196 998

## Description

### Field of the invention

Embodiments of the present invention relate to composite structures, preferably composite foam structures and more specifically composite foam structures used for protective head liner structures (e.g. in helmet liners), as well as to corresponding liners, helmets and the use of composite foam structures for protecting against impact.

### Background of the invention

During an accident, the human head is susceptible to both linear and rotational accelerations. Linear and rotational accelerations are products of radial and tangential forces on the head (and helmet) respectively, in an oblique impact event. Research has shown that oblique impacts are more common than normal impacts.

The role of rotational (angular) acceleration in serious head injuries has already been demonstrated in 1943. Moreover, in various studies, it was concluded that rotational velocity and acceleration contribute more than linear acceleration to traumatic head injuries such as concussions, diffuse axonal injuries (DAI), and acute subdural hematoma (ASDH). The role of rotational velocity and acceleration in occurrence of ASDH is also confirmed by other researchers. Therefore, it is concluded that rotational and linear acceleration are both important for a more precise assessment of the severity of brain injury and should be mitigated.

Although conventional bicycle helmets protect cyclists against linear acceleration, however their performance in terms of protection against rotational acceleration during oblique impact events can be further improved. Patent Application US 2014/0196998 A1 discloses a load-absorbing material for the protection of an object from a load, for example for a helmet.

Therefore there is a need for novel solutions to limit the rotational acceleration and velocity.

### Summary of the invention

It is an object of the invention to provide a novel material concept to limit rotational acceleration and velocity.

This object is met by the device, uses of device and method according to the independent claims 1, 10, 13, 14 and 15 of the present invention. The dependent claims relate to preferred embodiments.

It is an advantage of embodiments of the present invention that a novel material concept is provided allowing to minimize, upon impact, rotational acceleration which is known to be correlated with serious traumatic brain injuries such as acute subdural hematoma (ASDH).

It is yet another advantage of embodiments of the invention that novel composite foams and preferably anisotropic composite foams are provided showing good properties.

It is yet another advantage of embodiments of the invention to provide head protection systems in oblique impact.

In an aspect the present invention provides composite structures for impact energy absorption, said structure comprising a plurality of core structures, each core structure of the plurality of core structures comprising a first cellular material, each core structure of the plurality of core structures configured as a column having a column axis; and a support material surrounding each core structure of the plurality of core structures, the support material comprising a unitary body of a second cellular material having a plurality of recesses therein, each core structure of the plurality of core structures disposed respectively within a recess of the plurality of recesses in the unitary body of the support material, characterized in that the cellular materials have when loaded in compression an elasto-plastic behaviour with a plateau stress, followed by densification and when loaded in shear show plastic behaviour with a strain at maximum load or failure strain larger than 8%, preferably more than 15%, and whereby the first cellular material has a higher compressive yield and plateau stress as compared to the second cellular material.

In another aspect the present invention provides anisotropic composite structures for impact energy absorption, said anisotropic structure comprising a plurality of core structures, each core structure of the plurality of core structures comprising a first cellular material, each core structure of the plurality of core structures configured as a column having a column axis; and a support material surrounding each core structure of the plurality of core structures, the support material comprising a unitary body of a second cellular material having a plurality of recesses therein, each core structure of the plurality of core structures disposed respectively within a recess of the plurality of recesses in the unitary body of the support material, characterized in that the cellular materials have when loaded in compression an elasto-plastic behaviour with a plateau stress, followed by densification and when loaded in shear show plastic behaviour with a strain at maximum load or failure strain larger than 8%, preferably more than 15%, and whereby the first cellular material has a higher compressive yield and plateau stress as compared to the second cellular material.

The ratio of the core yield stress to the matrix yield stress may be at least 2.5, advantageously at least 5. The ratio of the core plateau stress to the matrix plateau stress may be at least 2.3, advantageously at least 5.

The cores may be made of a first cellular material having a higher density than the second cellular material from which the support material is made.

It is an advantage of embodiments of the present invention that the selected material and configuration results in less rotational impact, when an object is subject to an impact.

In preferred embodiments the support or matrix material surrounds and contacts the core structures.

It is an advantage of embodiments of the present invention that loading the structure is performed well into the non-elastic regime of the used materials, with irreversible deformation because the energy absorption mainly happens in the plastic region.

In preferred embodiments the plurality of core structures are provided in an array, wherein the core structures are provided in rows and columns. In specific preferred embodiments the core structures are positioned within a fixed distance from each other.

It is to be noted that the exact shape of the core structures is not strongly influencing the properties. The core structures may be pillar like structures. The cross-sectional shape is not limiting embodiments of the present invention.

In preferred embodiments the column may comprise a triangular, circular, square, pentagonal, hexagonal, heptagonal, octagonal or other polygonal quasi-circular cross-section. Where in embodiments of the present invention reference is made to quasi-circular, reference is made to a cross-sectional shape whereby an inscribed circle has a surface area differing less than 50%, advantageously less than 30%, more advantageously less than 15% from the surface area of the polygon.

In preferred embodiments the column has a conical, cylindrical or pyramidal shape.

In preferred embodiments the column has a constant or variable cross-section along the column axis. In further preferred embodiments the column has a cross-sectional area, which varies maximum 50% in size over the length of the column.

In preferred embodiments the core preferably consists of one material, and in some embodiments, the core comprises an elastomer or foam. In preferred embodiments the column height extends to at least 50%, preferably at least 80% and most preferably by at least 100% of the thickness of the composite structure.

In preferred embodiments the first and second material is a foam material and preferably a polymer foam material. Although embodiments of the present invention can use gel-materials, in preferred embodiments non-gel elastomers and/or higher-durometer elastomers or thermoplastic or thermoset polymers may be used, particularly in the form of a foam material (e.g. comprising closed or open cells). Examples of suitable materials are, cross-linked latex rubber, cross-linked and non-cross-linked synthetic elastomers of many types (e.g. SANTOPRENE® of any grade, KRATON® of any grade, SEPTON® of any grade, isoprene, butadiene, silicone rubber, thermoset or thermoplastic polyurethane and many others), natural rubber, thermoplastic elastomer, PVC, polystyrene, expanded polystyrene synthetic rubber, polyurethane, polyurethane foam, polyurethane memory foam, foamed gel, latex rubber, synthetic latex rubber, latex foam rubber, latex foam, polyolefin, foamed polyolefin (including, but not limited to, foamed polyethylene), or any other flexible or elastic material.

In some embodiments, the number of cores per square unit may be at least 5 per 100 cm², e.g. at least 7 per 100cm², e.g. at least 10 per 100cm².

In another aspect the present invention provides liners comprising an anisotropic composite structure according to embodiments of the present invention, wherein the core structures are configured as a column having a column axis, the core structures having a column axis which extends over at least 80% of the thickness of the liner.

In preferred embodiments the columns of the liner have an essentially cylindrical shape, or have a constant triangular, square, pentagonal, hexagonal, heptagonal, octagonal or other polygonal quasi-circular cross-section, or have a conical or pyramidal shape. In preferred embodiments the liner is a foam liner.

In another aspect the present invention provides the use the composite structure for impact energy absorption.

In another aspect, the present invention provides the use of an anisotropic composite structure or liner according to embodiments of the present invention, for application in protective helmets, like bicycle helmets, motorcycle helmets, equestrian helmets or ski-helmets, or in protective liner materials, like headliners in automotive interiors or protective elements for head protection or body protection, like helmet padding or headliners in vehicles.

In yet a further aspect the present invention provides a method of producing an anisotropic composite structure, the method comprising:
- providing a unitary body of a second cellular material, the unitary body comprising a plurality of recesses therein;
- providing a plurality of core structures in said recesses, and preferably completely filling such recesses, such that said unitary body acts as a matrix or support material surrounding the core structures, whereby each core structure of the plurality of core structures comprises a first cellular material, each core structure of the plurality of core structures configured as a column having a column axis;
characterized in that the first and second cellular materials have when loaded in compression an elasto-plastic behaviour with a plateau stress, followed by densification and when loaded in shear show plastic behavior with a strain at maximum load or failure strain larger than 8%, preferably more than 15%, and in that the first cellular material has a higher compressive yield and plateau stress as compared to the second cellular material.

The ratio of the core yield stress to the matrix yield stress may be at least 2.5, advantageously at least 5. The ratio of the core plateau stress to the matrix plateau stress may be at least 2.3, advantageously at least 5.

The cores may be made of a second cellular material having a higher density than the first cellular material from which the support material is made.

In preferred embodiments the matrix material is formed first including the necessary cavities. Then in a second step, foaming can take place wherein pillars are foamed into the recesses of the matrix structure. In embodiments where EPS is used as matrix and core material, the matrix may be configured by injecting EPS beads into a mould and fusing them together. Inserts in the mould ensure that space or cavities for the second foam is created. After removal of these inserts, or after transfer of the liner to a second mould, a second EPS type (e.g. in bead form) may be added and fused. For other foams, it can be done using injection moulding or reaction injection moulding.

In another aspect the present invention provides composite cellular materials, e.g. anisotropic cellular material structures for impact energy absorption, said composite cellular material structure comprising a plurality of core structures, each core structure of the plurality of core structures comprising a first cellular material, each core structure of the plurality of core structures configured as a column having a column axis; and a support material at least partially or fully surrounding each core structure of the plurality of core structures, the support material comprising a unitary body of a second cellular material having a plurality of recesses therein, each core structure of the plurality of core structures disposed respectively within a recess of the plurality of recesses in the unitary body of the support material. In preferred embodiments the support material may be considered a matrix comprising the plurality of cellular core structures, resulting in a composite assembly.

In preferred embodiments, the cellular materials, when loaded in compression, show elasto-plastic behaviour with a plateau stress and strain at densification larger than 50% and when loaded in shear show plastic deformation and strain at maximum load or strain to failure larger than 8%, preferably larger than 15%.

In specific preferred embodiments, the cellular material is a polymer foam and more preferably a synthetic polymer foam.

In alternative embodiments, the cellular material could be based on other materials with high strain to failure, particularly also in shear, like in case of a metal foam; on the other hand brittle cellular materials, for example wood, would be much less suitable.

In preferred embodiments the column has a triangular, circular, square, pentagonal, hexagonal, heptagonal or octagonal or other polygonal quasi-circular cross-section.

In preferred embodiments the column axis has a conical, cylindrical or pyramidal shape. Or could be somewhat skewed.

In preferred embodiment the column has a constant or variable cross-section along the column axis. In embodiments where the columns have a variable cross-section, the cross-sectional area varies maximum 50% in size over the length of the column.

In preferred embodiments the core material of the composite material, referred to as the first cellular material, has a higher compressive yield and plateau stress than the support or matrix material, referred to as second cellular material. For example a suitable material combination comprises or consists of columns of EPS foam of density 120 kg/m3 in a matrix of EPS foam of density 40 kg/m3, where the EPS 120 has a yield stress and average plateau stress of respectively 1.2 and 1.7 MPa, whereas the corresponding values for EPS 40 are 0.25 and 0.35 MPa respectively.

In another aspect the present invention provides liners, wherein the liner comprises composite structures, e.g. anisotropic composite structures, preferably comprising cellular, e.g. foam, structures according to embodiments of the present invention, wherein the core structures have a length which covers at least 80% of the thickness of the foam liner.

In preferred embodiments the pillars have an substantially cylindrical shape, or have a constant triangular, square, pentagonal, hexagonal, heptagonal or octagonal or other polygonal quasi-circular cross-section, or have a conical or pyramidal shape or are somewhat skewed.

In another aspect the present invention provides the use of an anisotropic composite material, comprising cellular or foam material or a foam liner according to embodiments of the present invention, for application in protective helmets, like bicycle helmets, motorcycle helmets, equestrian helmets or ski-helmets, or in protective liner materials, like headliners in automotive interiors.

In another aspect the present invention provides helmets comprising an anisotropic cellular or foam structure or foam liner according to embodiments of the present invention. Embodiments of the present invention provide a novel concept of using anisotropic, pillared composite foams, in first instance for helmet liners, to reduce the rotational acceleration and velocity, with the main anisotropy direction perpendicular to the head. The proposed concept can also be used in other applications for head protection, like in headliner materials in car interiors.

In an aspect the present invention provides anisotropic protective cellular or foam liners for impact energy absorption, consisting of pillars of cellular materials or foams of a first type in a matrix of cellular materials or foam of a second type. Wherein the first type of cellular material, has a higher compressive yield and plateau stress than the support or matrix cellular material, referred to as second cellular material. In preferred embodiments the pillars have a length which covers at least 80% of the thickness of the foam liner. In preferred embodiments the pillars have a cross-sectional area, which varies maximum 50% in size over the length of the pillars.

It is an advantage of a foam liner according to embodiments of the present invention that a reduction in rotational accelerations and velocity on a human head is achieved, which is protected by the foam liner, during an oblique impact event.

### Brief description of the drawings

Further features of the present invention will become apparent from the examples and figures, wherein:

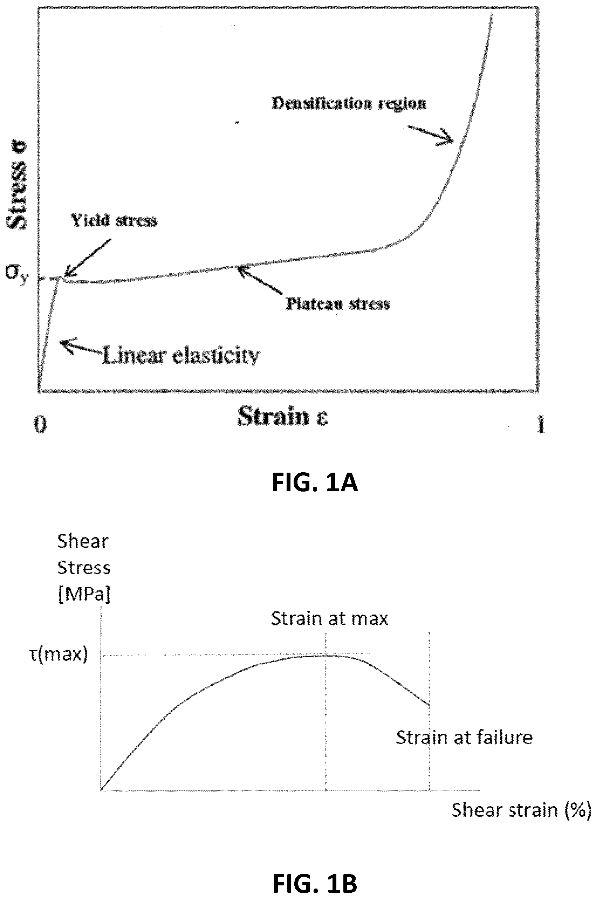

Fig. 1 (a) shows a schematic stress-strain diagram for a cellular material loaded in compression, with the definitions of yield stress and plateau stress indicated.
Fig. 1 (b) shows a schematic shear stress-strain diagram for a cellular material, indicating the definitions for strain at maximum stress and strain at failure.

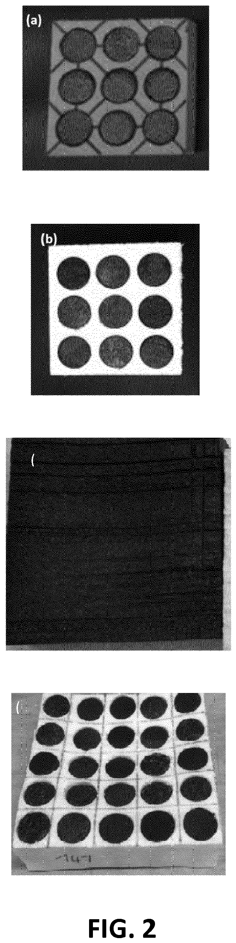

Figs. 2(a)-(b) illustrate images of a composite structure, e.g. comprising foam as first and second material, according to embodiments of the present invention. Fig 2 (a) illustrates a composite structure comprising foam as first and second material, more specifically comprising flexible PU foam as matrix or support material and EPS120 foam as cylinders, named or referred to as "PUmatrix/EPS120cylinder"; Fig. 2 (b) illustrates a composite structure, e.g. comprising foam as first and second material, comprising EPS40 as a matrix or support material and EPS120 foam as inserted cylinders named or referred to as "EPS40matrix/EPS120 cylinder"; and Fig. 2(c) is an image of a reference single layer EPS foam with density of 80 kg/m3 known in the art and used as a helmet liner.
Fig. 2(d) shows an EPS40 matrix with EPS120 foam cylinders in a 5 x 5 configuration. The samples used for testing in this work had dimensions of 8 x 8 x 2.5 cm.

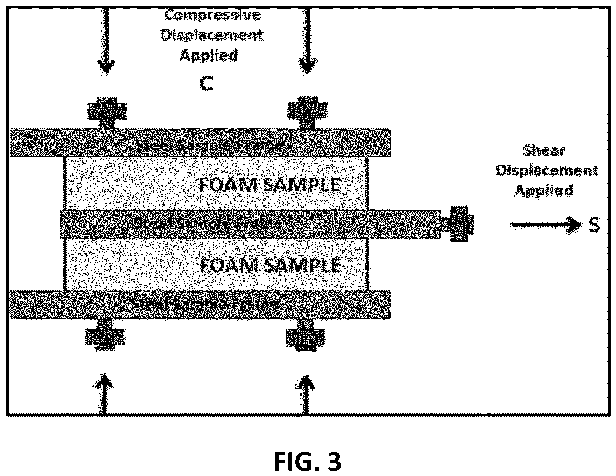

Fig. 3 schematically illustrates a combined shear-compression test method used to test composite foams according to embodiments of the present invention and to compare them to a reference sample.

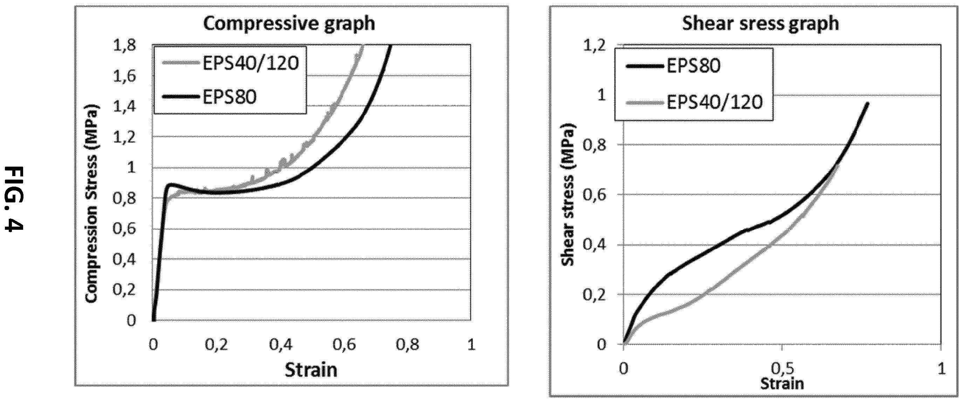

Fig. 4 illustrates compressive (left hand side) and shear (right hand side) stress-strain graphs of EPS80 as reference (as illustrated in Fig. 2(c)) and composite EPS40matrix/EPS120 cylinder (referred to as "EPS40/120") obtained from a combined shear-compression test under loading angle of 45°

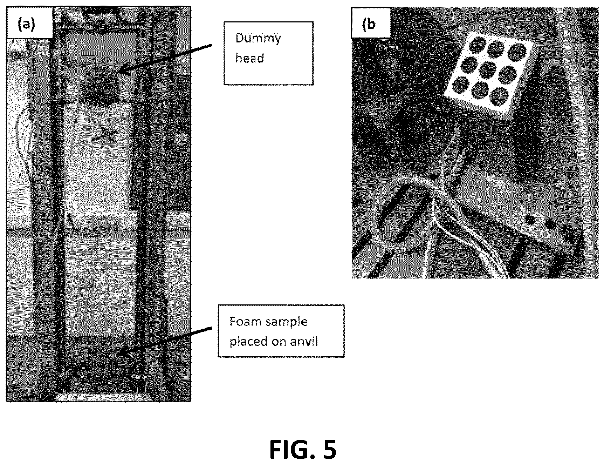

Fig. 5 (a) illustrates a rotational head impact set-up; and Fig. 5 (b) illustrates an image of the anvil with angle 45° and a foam sample according to embodiments of the present invention is placed on top.

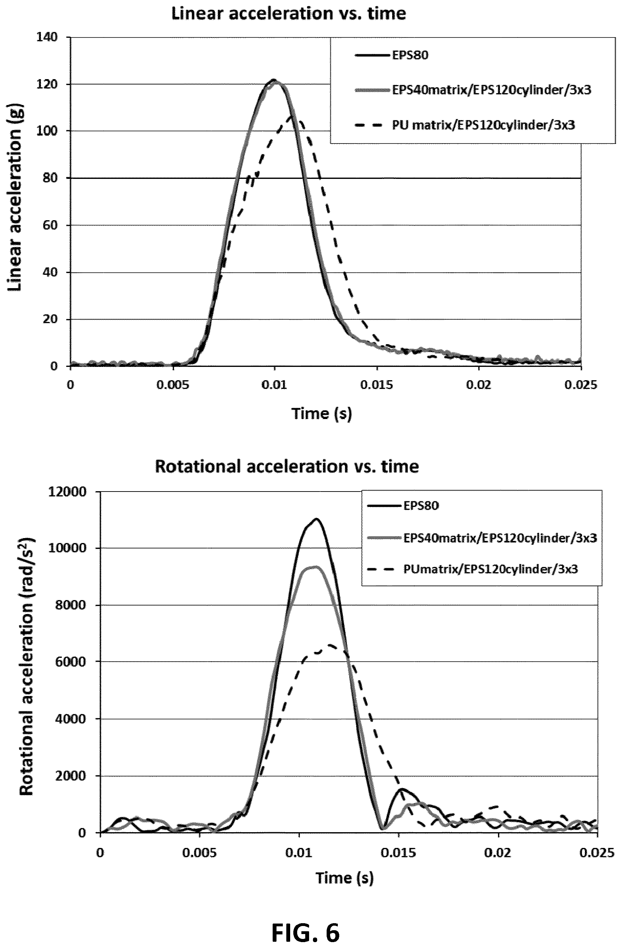

Figs. 6 (a)-(b) illustrate linear and rotational acceleration respectively measured by the test set-up illustrated in Figure 5 on two composite foam configurations according to embodiments of the present invention compared to a reference EPS 80; rotational accelerations are reduced by up to 40% for the tested 3x3 (9-pillar) configuration PUmatrix/EPS120 cylinder.

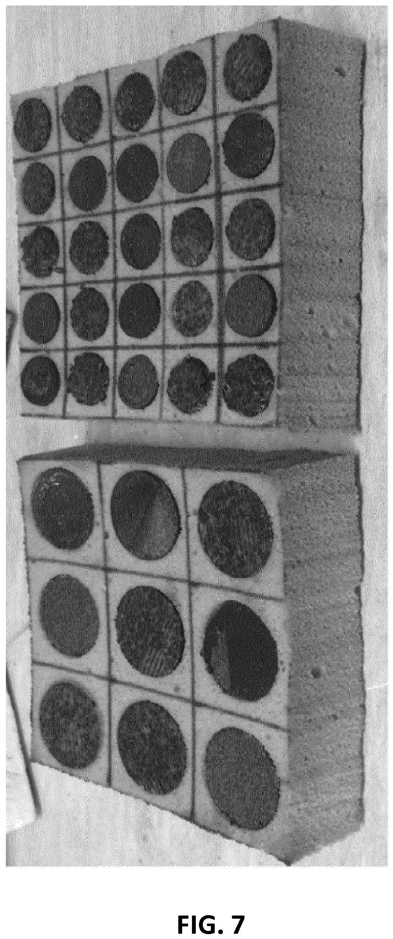

Fig. 7 illustrates composite foam configurations according to embodiments of the present invention. On the left hand side a configuration comprising a PU matrix and EPS120 cylinders is illustrated in a 3x3 configuration (providing a total of 9 cylinders). On the right hand side a PU matrix with EPS120 cylinders in a 5x5 configuration is provided (providing a total of 25 cylinders. The samples are according to embodiments of the present invention. The sample size was again 8 x 8 x 2 cm.

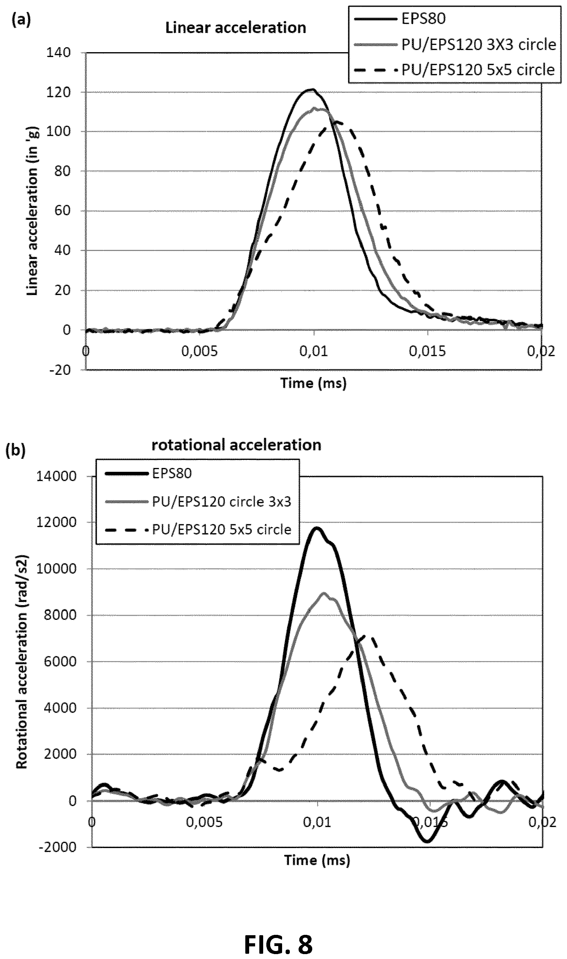

Fig. 8 (a) illustrates linear acceleration, whereas Fig. 8(b) illustrates rotational acceleration measured by the rotational acceleration set-up, on composite foams according to embodiments of the present invention compared to a reference sample. More specifically this comprises a PU matrix comprising EPS120 cylinders in a 3x3 configuration, a PU matrix comprising EPS120 cylinders in a 5x5 configuration according to embodiments of the present invention, and a reference EPS 80 sample. For the 5 x 5 configuration this amounts to a reduction in rotational acceleration of about 40%.

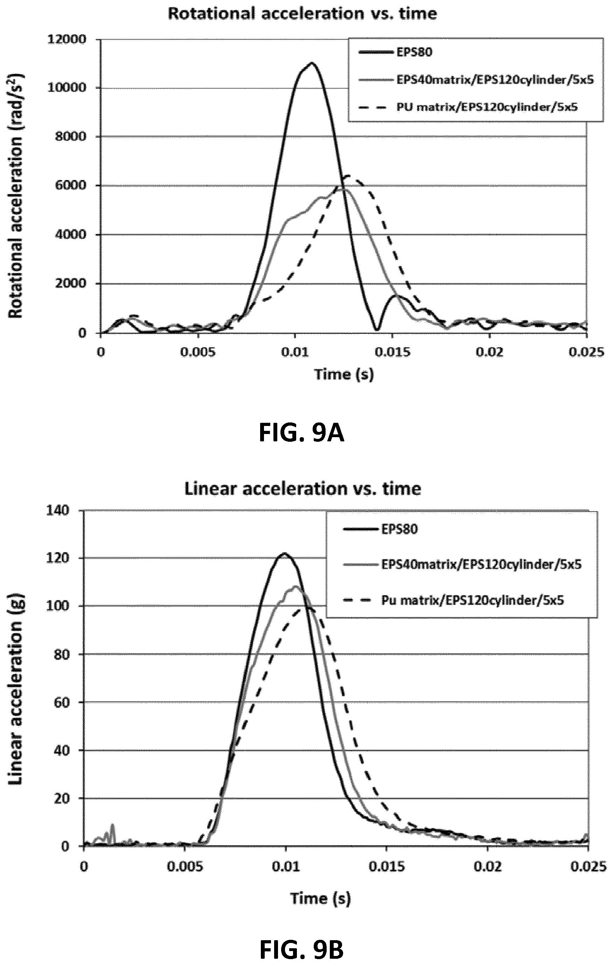

Fig. 9A to FIG. 9C illustrates (a) linear acceleration-time, (b) rotational acceleration-time and (c) rotational velocity-time for a reference EPS80 sample and composite foams according to embodiments of the present invention, like e.g. a composite foam comprising a PU matrix and EPS120 cylinders provided in a 5x5 configuration and a EPS40 matrix comprising EPS120 cylinders provided in a 5x5 configuration. The EPS40 matrix gives the same reduction in peak rotational acceleration as the PU matrix, but there is less time-shift in the peak. It is also shown that rotational velocity is decreased in both composite foams.

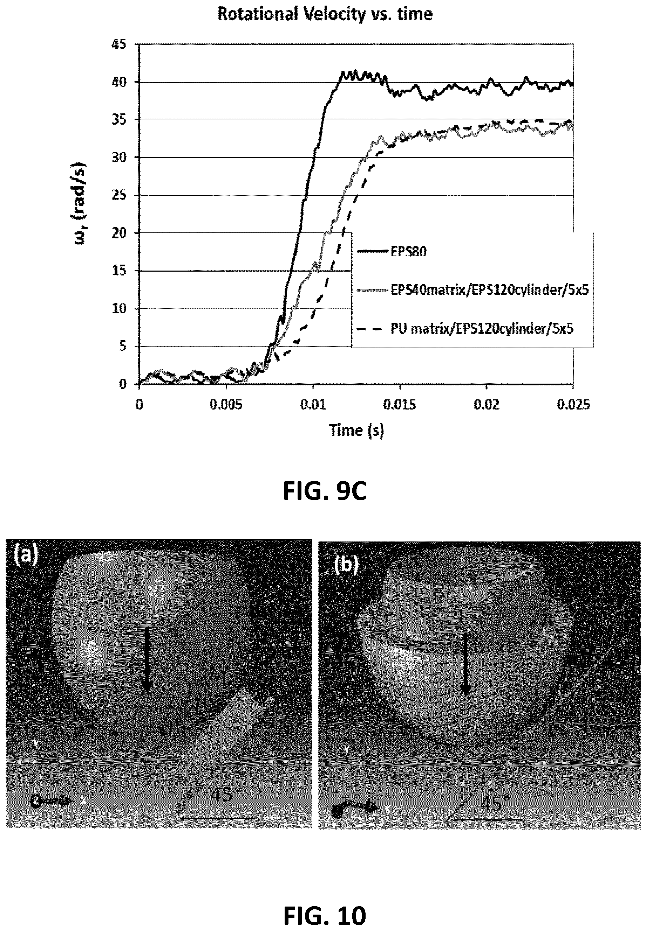

FIG. 10 illustrates (a) Oblique impact of the head on a foam where the foam sample is placed on an anvil at an angle of 45°; (b)) Oblique impact of helmeted head with foam, impacting an anvil at an angle of 45°, black arrow demonstrates the direction of the impact velocity, illustrating advantages of embodiments according to the present invention

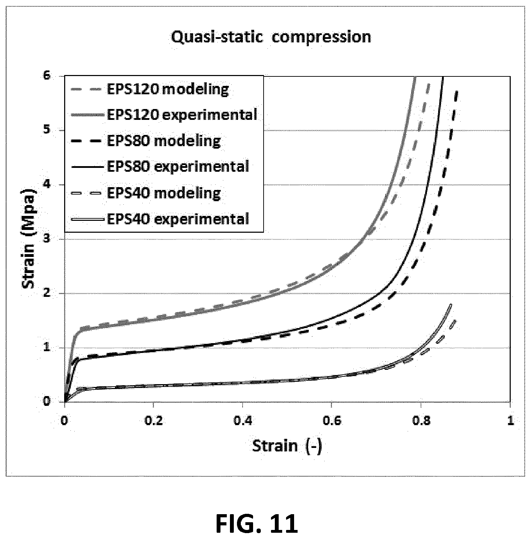

FIG. 11 illustrates a comparison between experimental and modeled compressive stress strain curves for EPS foam with three different densities of 80, 100 and 120 kg/m³, as can be used in finite element simulations illustrating advantages of embodiments according to the present invention.

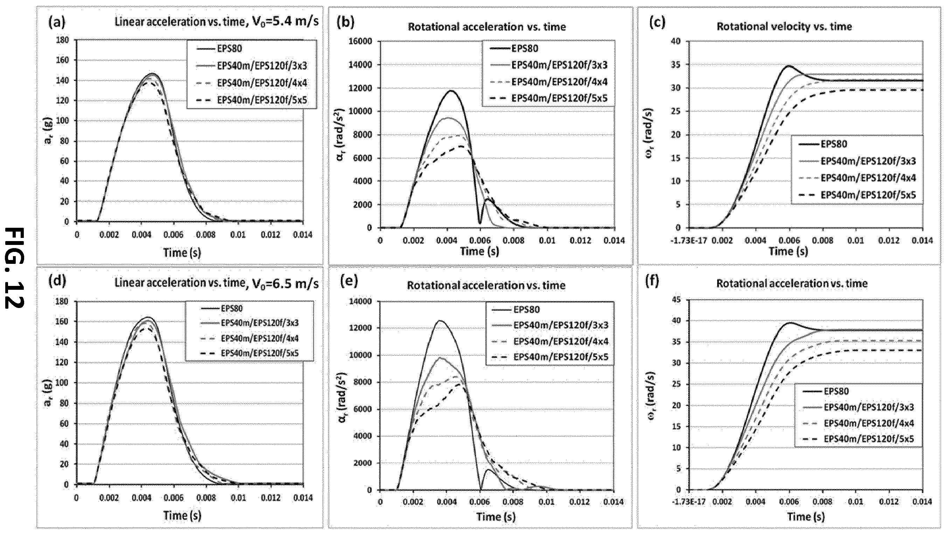

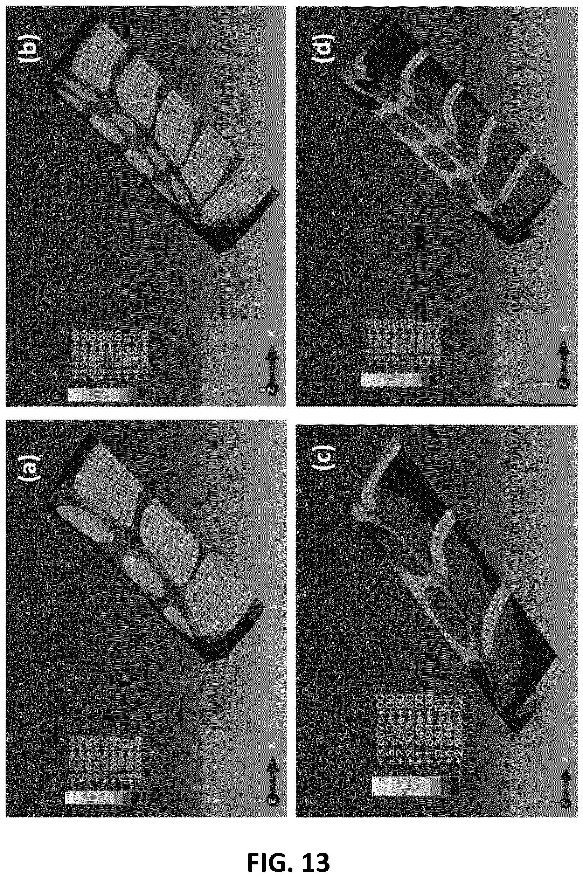

FIG. 12 illustrates the effect of cylinder number in oblique impact behavior of composite foams versus EPS80 when headform impacted flat foam laid on the anvil at angle of 45° and impact velocity of 5.4 m/s and 6.5 m/s, respectively, illustrating advantages of embodiments according to the present invention. (a) and (d) illustrate resultant linear acceleration versus time; (b) and (e) illustrate resultant rotational acceleration versus time; (c) and (f) illustrate resultant rotational velocity versus time. FIG. 13 illustrates the deformation of composite foam samples when impacted by the headform at oblique angle of 45° (a) EPS40m/EPS120f/3x3, (b) EPS40m/EPS120f/5x5, (c) EPS120m/EPS40f/3x3, (d) EPS120m/EPS40f/5x5 illustrating advantages of embodiments according to the present invention. Bending mode of cylinders during impact can be observed in all the samples.

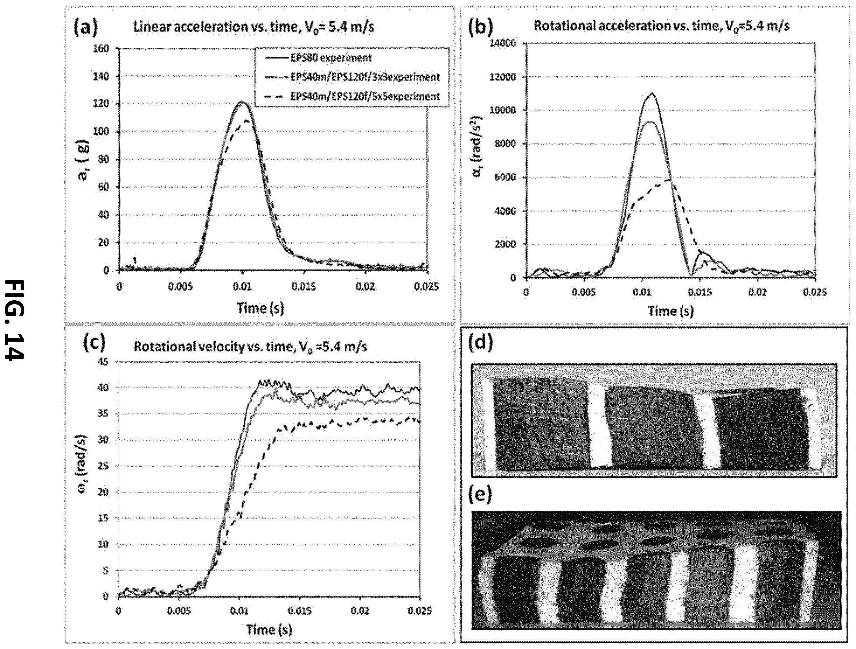

FIG. 14 illustrates experimental results showing the effect of the number of foam cylinders on oblique impact behavior of composite foams of EPS40m/EPS120f/3x3 and EPS40m/EPS120f/5x5 versus EPS80 at angle of 45°, illustrating advantages of embodiments of the present invention. (a) illustrates resultant linear acceleration; (b) illustrates resultant rotational acceleration; (c) illustrates resultant rotational velocity; (d) to (e) illustrates images of the over-the-thickness cross section of composite foam after oblique impact where bending of the cylinders can be clearly observed.

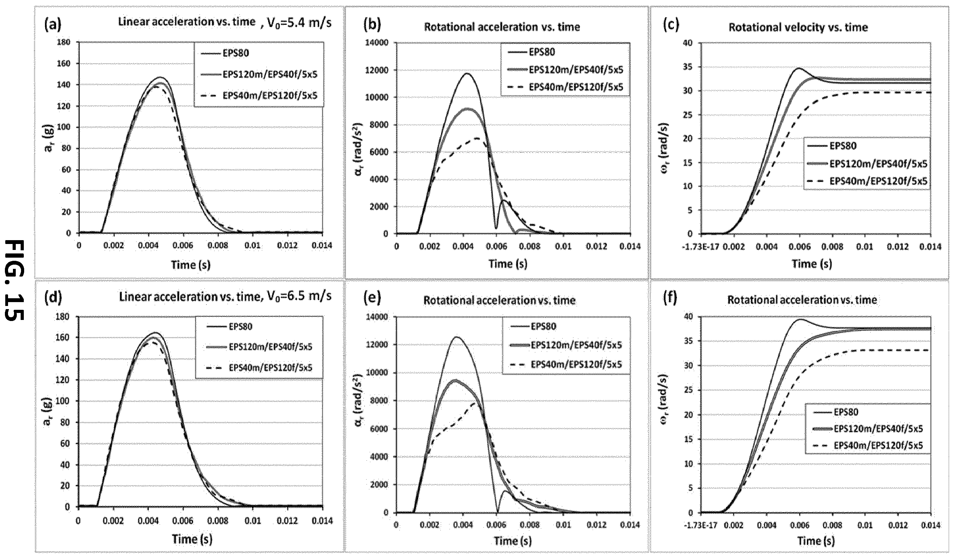

FIG. 15 illustrates the effect of matrix stiffness in oblique impact behavior of composite foams of EPS40m/EPS120f/5x5 and EPS120m/EPS40f/5x5 versus EPS80 obtained from FE simulations when headform impacted the flat foam laid on the 45° anvil with impact velocity of 5.4 m/s and 6.5 m/s, respectively, illustrative of advantages of embodiments of the present invention. (a) and (d) illustrate resultant linear acceleration versus time; (b) and (e) illustrate resultant rotational acceleration versus time; (c) and (f) illustrate resultant rotational velocity versus time;

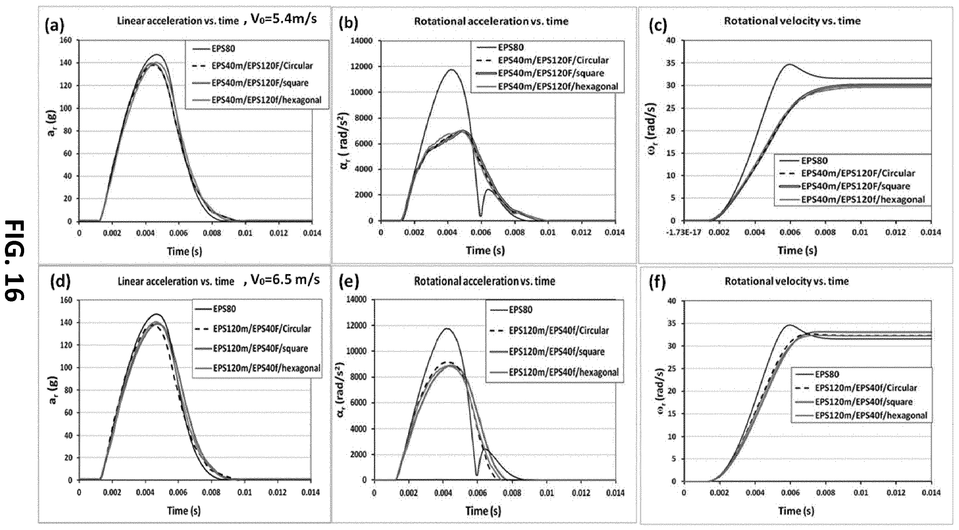

FIG. 16 illustrates the effect of pillar foam cross section shape in oblique impact behavior of composite foams of EPS40m/EPS120f/5x5 versus EPS80 obtained from FE simulations when headform impacted the flat foam laid on the 45° anvil with impact velocity of 5.4 m/s and 6.5 m/s, respectively, illustrating features of embodiments of the present invention. (a) and (d) illustrate resultant linear acceleration versus time; (b) and (e) illustrate resultant rotational acceleration versus time; (c) and (f) illustrate resultant rotational velocity versus time;

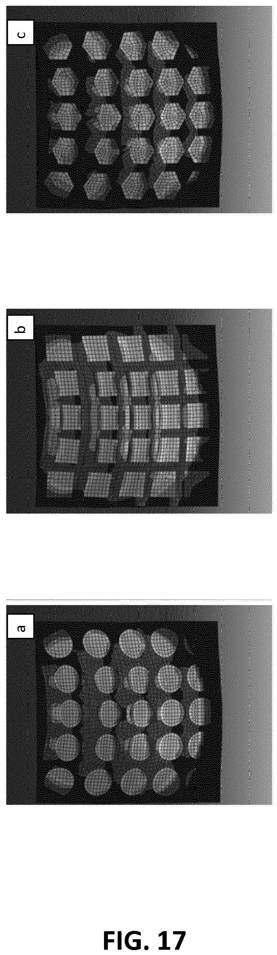

FIG. 17 (a) to (c) illustrate impacted EPS40m/EPS120f/5×5 composite foams when cylinder foam has a circular, square and hexagonal cross section, respectively.

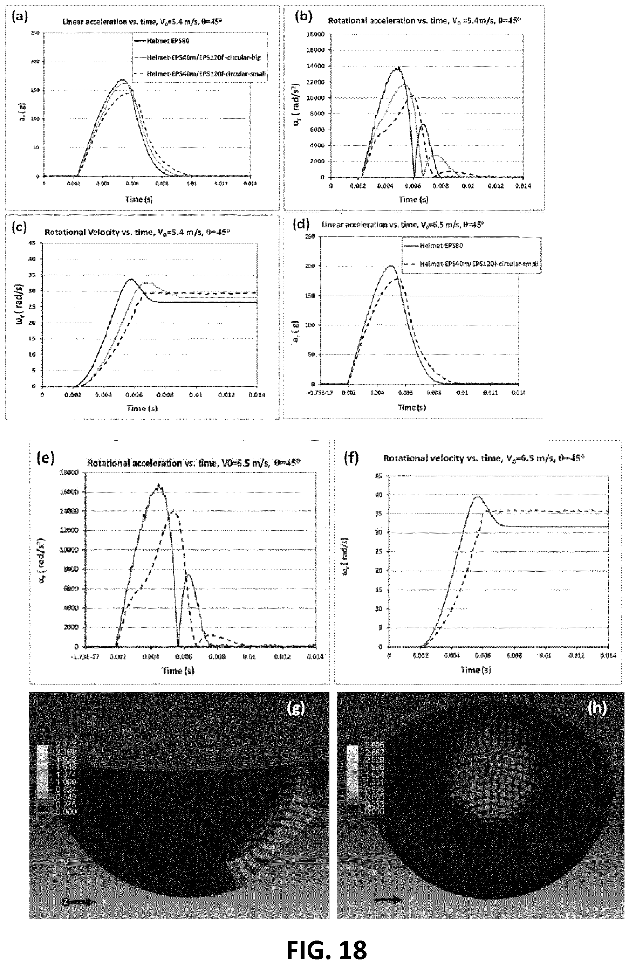

FIG. 18 illustrate the effect of the cross sectional diameter of the cylinder foam on performance of helmet in oblique impact at angle of 45° and impact velocity of 5.4 m/s, with two different diameters of cylinder foam, called big (diameter of 11.6) and small (diameter of 5.8 mm) in comparison to reference helmet comprised of EPS80, illustrating features of embodiments of the present invention; (a)-(c) illustrate linear acceleration, rotational acceleration and rotational velocity versus time, respectively. Oblique impact performance of helmet made of composite foam of EPS40m/EPS120f with small cylinder diameter in comparison to EPS80 reference helmet, at angle of 45°and impact velocity of 6.5 m/s; (d)-(f) illustrate linear acceleration, rotational acceleration and rotational velocity versus time, respectively; (g)-(h) illustrate side view of cross section of impacted helmet showing the bending and buckling of cylinder foams and view from the top.

### Detailed description of preferred embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated. The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein. In the drawings, like reference numerals indicate like features; and, a reference numeral appearing in more than one figure refers to the same element.

The drawings and the following detailed descriptions show specific embodiments of composite foam structures.

In embodiments where the term "composite structure" is used, one may refer to a structure comprising of core elements or structures like cylinders, preferably provided in an array configuration, positioned in a matrix or supporting material, which creates anisotropy at the macro level resulting in an "anisotropic composite structure". The idea here is to create anisotropy on macro-level, in mechanical properties, by combining two different materials in a configuration which results in directional dependency of the mechanical properties. The advantage of this method is that the anisotropy ratio can be controlled by adjusting the mechanical properties and/or volume fraction of each constituent. Moreover, in embodiments where cellular materials or foams are used, resulting in a composite foam structure, these can be easily shaped to the complex shapes for example of a helmet. It is to be noted that when cellular materials or foams are used as core and/or matrix or support material, one may apply anisotropic foams (thus anisotropic on micro-level or at cell level of the material) instead of conventional isotropic foams without the present invention being limited thereto.

Embodiments of the present invention provide a pillared composite structure, more preferably a composite foam structure, for protective head liner structures (e.g. in helmet liners), which advantageously has the ability of better head/body protection by further reducing rotational acceleration in comparison to conventional single layer foam. This will lead to reduction of rotational acceleration and velocity experienced by the head/body during an impact.

The pillared composite foam according to embodiments of the present invention can be utilized in protective helmets (bicycle, motorcycle, equestrian and ski helmets) and interiors of crashworthy structures to protect the occupant's head in an accident. This system particularly focuses on further reduction of rotational acceleration and/or velocity thus leading to lower chance of traumatic head injuries. The pillared composite liner structure according to embodiments of the present invention may be manufactured in a lab and a series of static and dynamic tests may be performed on this structure.

An example of the pillared structure according to embodiments of the present invention is shown in Figures 2a-2b. Figures 2(a)-2(b) illustrate embodiments of the present invention where core structures have a uniform cylindrical cross-sectional shape along their lengths (i.e., along the column axis), and are arranged at uniform spacing in an ordered array of rows and columns. However the present invention is not limited to structures having a straight and parallel column axis. Pillars or columns of a material, e.g. foam, with a first density are disposed and surrounded by a support material or matrix of a second material, e.g. foam, with second density. The performance of a pillared or columned composite structure according to embodiments of the present invention with "overall density" of 80 kg/m³ has been compared with a conventional single layer EPS foam with the same density and thickness. The composite foam according to embodiments of the present invention was manufactured by using for example expanded polystyrene foam with two different densities as first and second material.

A pillared or columned composite foam system according to embodiments of the present invention may comprise at least two components: a low-density foam (e.g. EPS with density 40 kg/m³) as a matrix or support material and a higher density foam as compared to the low-density foam (e.g. EPS with density 120 kg/m³) in the form of e.g. cylindrical inserts. The soft foam (matrix or support material for the cores) advantageously acts as a binder which holds the hard cylinders, as compared to the support material, together and facilitates the movement of the cylinders especially during oblique loads. It is believed that rotational acceleration results from the shear stress component applied to the head in an oblique impact. Moreover the rotational acceleration results from an impact force vector that does not pass through the centre of gravity of the head, and the rotational accelerations subsequently induce strains and stresses in the helmet and inside the head. In isotropic materials, the resistance to compression and shear are coupled. Development of anisotropic composite structures enables a decoupled optimization of linear and rotational impact, as they are linked to different head traumas. The pillared composite foam according to embodiments of the present invention possesses anisotropic mechanical behaviour in comparison to single layer isotropic foam. This anisotropy at macro level is caused by the geometry and by using foam with two different densities. The more efficient structure consists of pillars of high density or hard foam in a matrix of low density or soft foam, but the reverse structure of soft/low density foam inside a hard/high density foam, also shows some of the targeted effect.

The ratio of the core yield stress to the surrounding material (also referred to as matrix) yield stress may be at least 2.5, advantageously at least 5. The ratio of the core plateau stress to the surrounding material (also referred to as matrix) stress may be at least 2.3, advantageously at least 5.

The cores may be made of a first cellular material having a higher density than the second cellular material from which the support material is made.

Figures 2 (a)-(b) demonstrate two examples of a composite foam according to embodiments of the present invention. Fig. 2(a) shows a composite of soft and flexible low density polyurethane foam as support material with cylinders of EPS120 (PUmatrix/EPS120cylinder) provided in a 3x3 array, where Fig. 2(b) shows a composite of EPS40 as the matrix and EPS120 as inserted cylinders. Fig 2(c) demonstrates a single layer EPS80 used in helmet liners as known in the art as reference. Figure 2(d) shows a 5 x 5 array of EPS120 cylinders in an EPS40 matrix. Overall density and thickness of all four configurations are comparable. Since in oblique impact two components of force, one in compression and one in shear, are applied to the head, a static biaxial test has been carried out on the developed foam structures to be able to screen various configurations in a non-dynamic test set-up. Performance is compared to conventional single layer foam materials. The biaxial combined shear-compression tester is equipped with two independent load cells and displacement actuators which can apply displacement in shear and compression direction independently. The test set-up used to test structures according to embodiments of the present invention is illustrated schematically in Fig. 3. The test apparatus as illustrated in Fig. 3 may be used as an insert into an existing biaxial test bench for textiles. This insert device allows for the testing of foams by the application of compression displacements along one machine axis and the application of shear displacements along the orthogonal axis. Each axis has an independent displacement actuator and an independent load cell. The displacement rate of each axis can be varied from 0 to 20 mm/min meaning that mimicking any resultant angle of deformation, from pure compression (angle 0°) to simple shear (angle 90°), is possible. In embodiments samples may be tested under a deformation angle of 45°, meaning both displacement rates along the shear and compressive axes were set to 2mm/min. Tests are preferably performed at room temperature. The output of these tests consists of two simultaneous curves: a compressive stress-strain curve and a shear stress-strain curve. The compressive and shear stress-strain curves obtained from combined shear-compression tests under a loading angle of 45 degrees are shown in Fig. 4, left and right hand side respectively, and compared with results for a single layer EPS80 as shown in Fig. 2(c) as reference.

As observed in Fig. 4, the composite foam according to embodiments of the present invention, more specifically the structure illustrated in Fig. 2(b) demonstrates lower shear stress levels during a biaxial combined shear-compression test as compared to a single EPS80 layer as reference material. Whilst compressive stress levels of composite foam are comparable with those of t isotropic single layer counterpart, lower shear stress level is believed to lead to lower rotational accelerations during an oblique impact test. Rotational impact tests were carried out on the oblique impact test rig of the applicant. The dummy head used in this set-up is the Hybrid III, equipped with three linear accelerometers in x,y,z directions and a gyroscope which can measure the rotational speed in x,y and z directions. An array of three linear accelerometers and a gyroscope in the centre of gravity of the dummy head, allow the measurement of the three linear accelerations and three rotational velocities in x,y,z direction respectively. The acquired rotational velocities would be differentiated subsequently to obtain rotational acceleration. The dummy head is dropped onto an anvil with angle of 45 ° in order to mimic the oblique impact. In embodiments the foam sample may be placed on the anvil as shown in Fig. 5, and the dummy head is dropped on the foam sample with a speed of 5.4 m/s. Fig. 6 demonstrates the linear and rotational accelerations of two pillared composite foam configurations, EPS120 cylinders in a PU supporting material and EPS120 cylinders in a EPS40 support material as illustrated respectively in Fig. 2(a) and (b), according to embodiments of the present invention compared with a single layer EPS80 as reference. As observed, a reduction of up to 30 percent in rotational acceleration is observed. Further reduction is possible by decreasing the cylinder diameter and thus increasing the number of cylinders in the structure (which is also illustrated in Fig. 7 and subsequently in Fig.8 (a) -(b)). This leads to an increase of the anisotropy degree of the structure and also to easier buckling of the thin cylinders and hence leads to further reduction in shear stress and subsequently rotational acceleration.

Experimental results of PU support material and EPS120 as core elements with 9 cylinders (in a 3x3 array) and 25 cylinders (in a 5x5 array) are provided in Figs. 8(a)-(b). The configuration of the structures tested is provided in Fig. 7. As illustrated in Fig. 8 increasing the number of pillars per unit area, leads to further reduction in peak rotational acceleration (up to 40% compared to isotropic EPS 80 in this example). There was also some shift in the peak for the 5 x 5 configuration, which may be attributed to the increased likelihood of buckling of the thinner EPS 120 pillars in the soft PU matrix.

Finally, in Fig. 9, also results are shown for a 5x5 array of EPS120 cylinders in an EPS40 matrix; in this case the reduction in rotational acceleration compared to EPS80 is similar, but there is less time shift for the peak acceleration, due to lower flexibility of EPS40 matrix than the PU matrix and thus buckling of the pillars will be reduced. Both composite configurations demonstrate reduction in rotational acceleration and velocity.

In principle, the number of pillars per unit area can be varied over a broad range. In the experimental work presented here, 9 or 25 cylinders were prepared in a sample size of 8 x 8 cm. In case of foam densities of the pillars (EPS120) versus the surrounding matrix (EPS40), a pillar volume fraction of 50% was used to obtain an overall density of 80 kg/m3. For any application, the number of cylinders per unit area, the densities of the pillar and matrix and the pillar volume fraction may be optimized. Manufacturability of the material will also play an important role, where very thin pillars will be more difficult to manufacture.

In the examples presented, the packing arrangement of the pillars was a square packing, but the present invention is not limited thereto and other packings may be chosen, like a hexagonal packing or even a more random packing, although it is essential that sufficient matrix material is present in between the pillars to take the shear strains induced during oblique loading.

By way of illustration, embodiments of the present invention not being limited thereto, a number of results will further be reported, illustrating features and advantages of particular embodiments according to the present invention.

First, the correlation between the level of anisotropy in composite foams and rotational acceleration mitigation, as obtained from experiments, is discussed.

The effectiveness of composite foams in reducing rotational acceleration depends on the number and size of the cylinders and the level of anisotropy, expressed as the ratio of the yield or plateau stress of the cylinders compared to the yield or plateau stress of the matrix foam.

Values for the controlling parameters, that were evaluated, are shown in below - table. It shows for instance that a level of anisotropy of 2.3 (for the EPS120/EPS60 cylinder/matrix configuration), combined with a cylinder density of 9 cylinders in a surface of 64 cm², gives a reduction in rotational acceleration of 4%, compared to EPS80 foam of the same thickness (25 mm). Increasing the cylinder density to 25 cylinders / 64 cm², reduces the rotational acceleration by 18% , whereas increasing the level of anisotropy to order 5, brings the reduction in rotational acceleration to 9 %. Combination of both effects though, produces a reduction in rotational acceleration of 44%. All these results are for a same overall density of 80 kg/m³.

Choosing a relatively soft matrix (example PU) gives already a significant reduction in rotational acceleration (-37%) for a cylinder density of 9 cylinders / 64 cm² and even more for 25 cylinders / 64 cm².

| Cylinder foam/matrix foam | Ratio of cylinder yield stress/ matrix yield stress | Ratio of cylinder plateau/ matrix plateau stress | Number of cylinders in a surface of 64 cm² (8 × 8 cm) | Volume fraction of column foam (%) | Reduction in rotational acceleration |
|---|---|---|---|---|---|
| EPS120/EPS60 | 2.5 | 2.3 | 9 | 33.3 | -4% |
| EPS120/EPS60 | 2.5 | 2.3 | 25 | 33.3 | -18% |
| EPS120/EPS40 | 5.6 | 5 | 9 | 50 | -9% |
| EPS120/EPS40 | 5.6 | 5 | 25 | 50 | -44% |
| EPS120/PU | 39 | 29 | 9 | 50 | -37% |
| EPS120/PU | 39 | 29 | 25 | 50 | -40% |

Secondly, a parametric study on the performance of composite foam in oblique impact, is performed using finite element simulations of oblique impact of pillared composite foam. The FE model and simulation parameters are first described. The FE impact simulations consist of three main parts, the EPS foam, the headform and the anvil used. Numerical simulations were performed to investigate the oblique impact performance of pillared-composite foams in comparison to single layer EPS foam for head protection. The impact simulations were carried out for two different impact velocities, being 5.4 m/s and 6.5 m/s. For the simulation of oblique impact behavior, two different configurations were considered which are shown in FIG. 10 (a) and (b). In the first case (a), the flat foam sample with dimensions of 8 cm (length)x8 cm (width)x2.5 cm (thickness) is placed on a 45° anvil and the headform (approximated as a sphere) is dropped vertically on the foam specimen with the specified impact velocities. In the second configuration (b), the foam is placed on the spherical headform and covers half of the headform, resembling a hemispherical helmet which is illustrated in FIG. 10(b). The helmeted headform is subsequently dropped on the 45° anvil simulating oblique impact. In these simulations, the headform is modeled as a rigid body with a rigid body constraint at the centre of mass, from where the linear and rotational accelerations transferred to the headform are obtained. For the purpose of simplification, the headform is approximated as a sphere. The radius of the spherical head model was set at 8.5 cm. The weight of the headform was set to 4.5 kg similar to the weight of a hybrid III dummy head as used in the experiments. The EPS foam liner was modeled in Abaqus/Explicit using the crushable foam model for an isotropic material with volumetric hardening in conjunction with a linear elastic model. Material properties of EPS crushable foams such as Young's modulus, yield stress and plateau stress for the constitutive model used in the current study were determined by performing quasi-static compression experiments (see FIG. 11). The compressive stress-strain curves for EPS foams of different densities were also modeled using crushable foam material model in Abaqus and compared with experimental stress-strain curves as shown in FIG. 11. As shown in FIG. 11, a good correlation between experimental and modeling results can be observed. For meshing of the foam, C3D8R elements were used with distortion control which does not allow elements to invert during large deformations. The columns and matrix foam were bonded perfectly to each other. The anvil was also modelled as an analytical rigid part. The friction coefficient between the headform and the foam in the configuration where the foam was placed on the anvil (FIG. 10(a)) and also between the hemispherical helmet and the anvil (FIG. 10(b)) was set to *f*=*0.3.* The foam was connected to the anvil, in FIG. 10(a), or to the headform, in FIG. 10(b), using coupling where all the degrees of freedom of the foam surface which was in contact with the anvil or with the headform were restrained.

When discussing the simulation of oblique impact of the head on a flat foam, first the effect of number of cylinders on the oblique impact performance of composite foam is evaluated. FIG. 12 (a) to (f) demonstrates resultant linear and rotational accelerations and rotational velocity versus time transferred to the headform by impacting the foam samples at 45° oblique angle at two different impact velocities of 5.4 m/s and 6.5 m/s . The foam configurations used are EPS40m/EPS120f (with a matrix of EPS40 and cylinders of EPS120) with 9, 16 and 25 cylinders, compared to single layer EPS80. As observed in FIG. 12, by increasing the number of cylinders in the composite foam of EPS40m/EPS120f, only a slight decrease can be observed in linear acceleration transferred to the headform; however the concept of composite foam which introduces mechanical anisotropy in the foam structure shows its merit in reducing rotational acceleration (FIG. 12 (b) and (e)) and rotational velocity (FIG. 12 (c) and (f)). The deformation mode of the EPS120 foam pillars embedded in EPS40 matrix is shown in FIG. 13 (a) and (b) and is dominated by bending and buckling.

To confirm the findings of the modeling and to assess the efficiency of the model in predicting the composite foam behavior, oblique impact experiments have been performed as explained elsewhere in this specification, which showed similar effects as found by modeling. Experimental oblique impact results where the hybrid III dummy head impacted the foam samples with an impact velocity of 5.4 m/s, are given in FIG. 14 (a)-(c) where results for EPS40m/EPS120f with 9 and 25 cylinders in comparison to single layer EPS80 are given. Similar trends as shown in the simulations (FIG. 12(a)-(c)) can be observed in the experimental results shown in FIG. 14(a)-(c). It can be seen that as predicted by simulations, by increasing the number of cylinders in the composite foam structure, the rotational acceleration and velocity of the dummy head can be reduced significantly more.

Further, the effect of matrix yield and plateau stress versus cylinder yield and plateau stress on oblique impact performance of composite foam was studied.

In order to illustrate the effect of matrix foam yield and plateau stress versus cylinder foam yield and plateau stress on the efficiency of composite foams in head protection, FIG. 15 shows the 45° oblique impact simulation curves of EPS40m/EPS120f/5x5 versus EPS120m/EPS40f/5x5 for two impact velocities of 5.4 and 6.5 m/s. The number of foam cylinders was kept constant (25 cylinders).

The results highlight that using a softer matrix of EPS40 versus harder EPS120 cylinders mitigates the rotational acceleration and velocity much more than in the opposite case.

The effect of shape of the cross-section of the pillar foams on oblique impact performance of composite foams was also studied.

To investigate the effect of cross section geometrical shape, composite foams of EPS40m/EPS120f and EPS120m/EPS40f comprising of 25 cylinders were simulated with three different geometrical cross-sections of the cylinder foam namely, circular, square and hexagonal. Subsequently, oblique impact of the head at an angle of 45° and impact velocity of 5.4 m/s was performed. FIG. 16 (a)-(f) demonstrate the resultant linear and rotational accelerations and rotational velocity. As observed, the shape of the cross section merely affects the linear and rotational acceleration and rotational velocity in composite foams. It seems the parameter that can have a significant effect on the performance of composite foam is the size of the cross section (in conjunction with the number of cylinders) rather than its shape. Impacted foams with differently shaped pillars are illustrated in FIG. 17 (a) to (c). The linear impact of the helmeted head was also simulated. FIG. 18 (a) to (h) demonstrate resultant linear and rotational accelerations and rotational velocity transferred to the headform by using composite foam helmets in two different impact velocities of 5.4 and 6.5 m/s. Composite helmets are comprised of EPS40 as matrix and EPS120 as cylinder foam with two different diameters of 11.6 and 5.8mm respectively, and are referred to as "Helmet-EPS40/EPS120-circular-big and small", respectively. The results demonstrate that using composite foam helmet instead of single layer foam (EPS80) of the same density and thickness can lead to significant reduction in rotational acceleration. By decreasing the diameter of cylinder foam (EPS120) from 11.6 to 5.8 mm, the rotational acceleration peak can further be reduced. FIG. 18(g) also shows the side view of the helmeted head (with cylinder diameter of 5.8 mm) impacting the 45° anvil. The bending and buckling of the cylinders at the moment of impact can be seen in this figure. FIG. 18(h) demonstrates a view from the inside and the impacted area is visible.

The results demonstrate that using composite foam helmet instead of single layer foam (EPS80) of the same density and thickness can lead to significant reduction in rotational acceleration in both flat and helmet shape.

While specific embodiments of the subject invention have been discussed, the above specification is illustrative and not restrictive. Many variations of the invention will become apparent to those skilled in the art upon review of this specification and the claims below. The full scope of the invention should be determined by reference to the claims.

## Claims

1. An anisotropic composite structure for impact energy absorption, said anisotropic structure comprising a plurality of core structures, each core structure of the plurality of core structures comprising a first cellular material, each core structure of the plurality of core structures configured as a column having a column axis; and a support material surrounding each core structure of the plurality of core structures, the support material comprising a unitary body of a second cellular material having a plurality of recesses therein, each core structure of the plurality of core structures disposed respectively within a recess of the plurality of recesses in the unitary body of the support material, **characterized in that** the cellular materials have when loaded in compression an elasto-plastic behavior with a plateau stress, followed by densification and when loaded in shear show plastic behavior with a strain at maximum load or failure strain larger than 8%, preferably more than 15%, and whereby the first cellular material has a higher compressive yield and plateau stress as compared to the second cellular material.

2. The anisotropic composite structure of claim 1, where the plurality of core structures are provided in an array.

3. The anisotropic composite structure of claim 1 or 2, the column having a triangular, circular, square, pentagonal, hexagonal, heptagonal, octagonal or another polygonal quasi-circular cross-section or wherein the column has a conical, cylindrical or pyramidal shape.

4. The anisotropic composite structure of any of previous claims, wherein the column has a constant or variable cross-section along the column axis.

5. The anisotropic composite structure of claim 4, wherein the column has a cross-sectional area having a maximum variation in size over the length of the column of 50% .

6. The anisotropic composite structure of any of previous claims, wherein the first and second material is a foam material and preferably a polymer foam material.

7. The anisotropic composite structure of any of the previous claims, wherein the ratio of the core yield stress to the matrix yield stress is at least 2.5, advantageously at least 5.

8. The anisotropic composite structure of any of the previous claims, wherein the ratio of the core plateau stress to the matrix plateau stress may be at least 2.3, advantageously at least 5.

9. The anisotropic composite structure of any of the previous claims, wherein the density of cores is at least 5 per 100cm², at least 7 per 100cm² or at least 10 per 100cm².

10. Use of an anisotropic composite structure of any of previous claims for impact energy absorption.

11. A liner comprising the anisotropic composite structure of any of claims 1 to 10, wherein the core structures are configured as a column having a column axis, the core structures having a column axis which extends over at least 80% of the thickness of the liner, optionally wherein the columns have an essentially or substantially cylindrical shape, or have a constant triangular, square, pentagonal, hexagonal, heptagonal, octagonal or other polygonal quasi-circular cross-section, or have a conical or pyramidal shape.

12. The liner according to claim 11, wherein the liner is a foam liner.

13. Use of an anisotropic composite structure according to any of claims 1 to 10 or a liner according to claim 11 or 12, for application in protective helmets, like bicycle helmets, motorcycle helmets, equestrian helmets or ski-helmets, or in protective liner materials, like headliners in automotive interiors or protective elements for head protection or body protection, like helmets padding or headliners in vehicles.

14. Use of a helmet comprising the anisotropic composite structure according to any of claims 1 to 9 or a liner according to claim 11 or 12 to limit rotational acceleration and velocity.

15. A method of producing an anisotropic composite structure, the method comprising:
- providing a unitary body of a second cellular material, the unitary body comprising a plurality of recesses therein;
- providing a plurality of core structures in said recesses such that said unitary body acts as a matrix or support material surrounding the core structures, whereby each core structure of the plurality of core structures comprises a first cellular material, each core structure of the plurality of core structures configured as a column having a column axis;
**characterized in that** the first and second cellular materials have when loaded in compression an elasto-plastic behavior with a plateau stress, followed by densification and when loaded in shear show plastic behavior with a strain at maximum load or failure strain larger than 8%, preferably more than 15%, and **in that** the first cellular material has a higher compressive yield and plateau stress as compared to the second cellular material.

## Patentansprüche

1. Anisotrope Verbundstruktur für Stoßenergieabsorption, die anisotrope Struktur umfassend eine Vielzahl von Kernstrukturen, wobei jede Kernstruktur der Vielzahl von Kernstrukturen ein erstes Zellmaterial umfasst, jede Kernstruktur der Vielzahl von Kernstrukturen als eine Säule mit einer Säulenachse gestaltet ist; und ein Trägermaterial, das jede Kernstruktur der Vielzahl von Kernstrukturen umgibt, wobei das Trägermaterial einen Einheitskörper aus einem zweiten Zellmaterial mit einer Vielzahl von Vertiefungen darin umfasst, jede Kernstruktur der Vielzahl von Kernstrukturen jeweils in einer Vertiefung der Vielzahl von Vertiefungen in dem Einheitskörper des Trägermaterials angeordnet ist, **dadurch gekennzeichnet, dass** die Zellmaterialien, wenn unter Druck geladen, ein elastoplastisches Verhalten mit einer Plateauspannung haben, gefolgt von Verdichtung, und wenn unter Scherung geladen, plastisches Verhalten mit einer Dehnung bei Maximallast oder Versagensdehnung größer als 8%, vorzugsweise mehr als 15% zeigen, und wobei das erste Zellmaterial eine höhere Druckfließspannung und Plateauspannung verglichen mit dem zweiten Zellmaterial hat.

2. Anisotrope Verbundstruktur nach Anspruch 1, wobei die Vielzahl von Kernstrukturen in einer Gruppe bereitgestellt ist.

3. Anisotrope Verbundstruktur nach Anspruch 1 oder 2, wobei die Säule einen dreieckigen, kreisförmigen, quadratischen, fünfeckigen, sechseckigen, siebeneckigen, achteckigen oder anderen mehreckigen quasi-kreisförmigen Querschnitt hat oder wobei die Säule eine konische, zylindrische oder pyramidenförmige Form hat.

4. Anisotrope Verbundstruktur nach einem der vorstehenden Ansprüche, wobei die Säule einen konstanten oder variablen Querschnitt entlang der Säulenachse hat.

5. Anisotrope Verbundstruktur nach Anspruch 4, wobei die Säule eine Querschnittsfläche mit einer maximalen Größenvariation über die Länge der Säule von 50% hat.

6. Anisotrope Verbundstruktur nach einem der vorstehenden Ansprüche, wobei das erste und zweite Material ein Schaummaterial und vorzugsweise ein Polymerschaummaterial ist.

7. Anisotrope Verbundstruktur nach einem der vorstehenden Ansprüche, wobei das Verhältnis der Kernfließspannung zu der Matrixfließspannung mindestens 2,5, bevorzugt mindestens 5 ist.

8. Anisotrope Verbundstruktur nach einem der vorstehenden Ansprüche, wobei das Verhältnis der Kernplateauspannung zu der Matrixplateauspannung mindestens 2,3, bevorzugt mindestens 5 sein kann.

9. Anisotrope Verbundstruktur nach einem der vorstehenden Ansprüche, wobei die Dichte von Kernen mindestens 5 pro 100 cm², mindestens 7 pro 100 cm² oder mindestens 10 pro 100 cm² ist.

10. Verwendung einer anisotropen Verbundstruktur nach einem der vorstehenden Ansprüche zur Stoßenergieabsorption.

11. Auskleidung, umfassend die anisotrope Verbundstruktur nach einem der Ansprüche 1 bis 10, wobei die Kernstrukturen als eine Säule mit einer Säulenachse gestaltet sind, wobei die Kernstrukturen eine Säulenachse haben, die sich über mindestens 80% der Dicke der Auskleidung erstreckt, wobei die Säulen optional eine im Wesentlichen oder praktisch zylindrische Form haben oder einen konstanten dreieckigen, quadratischen, fünfeckigen, sechseckigen, siebeneckigen, achteckigen oder anderen mehreckigen quasi-kreisförmigen Querschnitt haben oder eine konische oder pyramidenförmige Form haben.

12. Auskleidung nach Anspruch 11, wobei die Auskleidung eine Schaumauskleidung ist.

13. Verwendung einer anisotropen Verbundstruktur nach einem der Ansprüche 1 bis 10 oder einer Auskleidung nach Anspruch 11 oder 12 zur Anwendung in Schutzhelmen wie Radsporthelmen, Motorradhelmen, Reisporthelmen oder Schihelmen oder in Schutzauskleidungsmaterialien, wie Dachauskleidungen in Fahrzeuginnenräumen oder Schutzelemente für Kopfschutz oder Körperschutz, wie Helmpolsterungen oder Dachauskleidungen in Fahrzeugen.

14. Verwendung eines Helms, umfassend die anisotrope Verbundstruktur nach einem der Ansprüche 1 bis 9 oder eine Auskleidung nach Anspruch 11 oder 12 zur Begrenzung von Drehbeschleunigung und Geschwindigkeit.

15. Verfahren zur Herstellung einer anisotropen Verbundstruktur, das Verfahren umfassend:
- Bereitstellen eines Einheitskörpers eines zweiten Zellmaterials, wobei der Einheitskörper mehrere Vertiefungen darin umfasst;
- Bereitstellen einer Vielzahl von Kernstrukturen in den Vertiefungen, sodass der Einheitskörper als ein Matrix- oder Trägermaterial dient, das die Kernstrukturen umgibt, wobei jede Kernstruktur der Vielzahl von Kernstrukturen ein erstes Zellmaterial umfasst, jede Kernstruktur der Vielzahl von Kernstrukturen als eine Säule mit einer Säulenachse gestaltet ist;
**dadurch gekennzeichnet, dass** das erste und zweite Zellmaterial, wenn unter Druck geladen, ein elastoplastisches Verhalten mit einer Plateauspannung haben, gefolgt von Verdichtung, und wenn unter Scherung geladen, plastisches Verhalten mit einer Dehnung bei Maximallast oder Versagensdehnung größer als 8%, vorzugsweise mehr als 15% zeigen, und wobei das erste Zellmaterial eine höhere Druckfließspannung und Plateauspannung verglichen mit dem zweiten Zellmaterial hat.

## Revendications

1. Structure composite anisotrope pour une absorption d'énergie d'impact, ladite structure anisotrope comprenant une pluralité de structures de noyau, chaque structure de noyau de la pluralité de structures de noyau comprenant un premier matériau cellulaire, chaque structure de noyau de la pluralité de structures de noyau étant configurée sous forme d'une colonne ayant un axe de colonne ; et un matériau de support entourant chaque structure de noyau de la pluralité de structures de noyau, le matériau de support comprenant un corps unitaire constitué d'un second matériau cellulaire ayant une pluralité d'évidements à l'intérieur, chaque structure de noyau de la pluralité de structures de noyau étant disposée respectivement à l'intérieur d'un évidement de la pluralité d'évidements dans le corps unitaire du matériau de support, **caractérisée en ce que** les matériaux cellulaires ont, lorsqu'ils sont chargés en compression, un comportement élasto-plastique avec une contrainte plateau, suivi d'une densification et lorsqu'ils sont chargés en cisaillement, présentent un comportement plastique avec une déformation à charge maximale ou une déformation à la rupture supérieure à 8 %, de préférence supérieure à 15 %, et de sorte que le premier matériau cellulaire a une limite en compression et une contrainte plateau plus élevées par comparaison au second matériau cellulaire.

2. Structure composite anisotrope selon la revendication 1, dans laquelle la pluralité de structures de noyau est fournie dans un réseau.

3. Structure composite anisotrope selon la revendication 1 ou 2, la colonne ayant une coupe transversale triangulaire, circulaire, carrée, pentagonale, hexagonale, heptagonale, octogonale ou autre polygonale quasi circulaire ou dans laquelle la colonne a une forme conique, cylindrique ou pyramidale.

4. Structure composite anisotrope selon l'une quelconque des revendications précédentes, dans laquelle la colonne a une coupe transversale constante ou variable le long de l'axe de colonne.

5. Structure composite anisotrope selon la revendication 4, dans laquelle la colonne a une surface en coupe transversale présentant une variation maximale de taille sur la longueur de la colonne de 50 %.

6. Structure composite anisotrope selon l'une quelconque des revendications précédentes, dans laquelle le premier et le second matériau sont un matériau en mousse et de préférence un matériau en mousse polymère.

7. Structure composite anisotrope selon l'une quelconque des revendications précédentes, dans laquelle le rapport entre la limite d'élasticité de noyau et la limite d'élasticité de matrice est d'au moins 2,5, avantageusement d'au moins 5.

8. Structure composite anisotrope selon l'une quelconque des revendications précédentes, dans laquelle le rapport entre la contrainte plateau de noyau et la contrainte plateau de matrice peut être d'au moins 2,3, avantageusement d'au moins 5.

9. Structure composite anisotrope selon l'une quelconque des revendications précédentes, dans laquelle la densité de noyaux est d'au moins 5 par 100 cm², d'au moins 7 par 100 cm² ou d'au moins 10 par 100 cm².

10. Utilisation d'une structure composite anisotrope selon l'une quelconque des revendications précédentes pour une absorption d'énergie d'impact.

11. Revêtement comprenant la structure composite anisotrope selon l'une quelconque des revendications 1 à 10, dans lequel les structures de noyau sont configurées sous forme d'une colonne ayant un axe de colonne, les structures de noyau ayant un axe de colonne qui s'étend sur au moins 80 % de l'épaisseur du revêtement, facultativement dans lequel les colonnes ont une forme essentiellement ou sensiblement cylindrique, ou ont une coupe transversale constante triangulaire, carrée, pentagonale, hexagonale, heptagonale, octogonale ou autre polygonale quasi-circulaire, ou ont une forme conique ou pyramidale.

12. Revêtement selon la revendication 11, dans lequel le revêtement est un revêtement en mousse.

13. Utilisation d'une structure composite anisotrope selon l'une quelconque des revendications 1 à 10 ou d'un revêtement selon la revendication 11 ou 12, pour une application dans des casques de protection, comme des casques de vélo, des casques de moto, des casques équestres ou des casques de ski, ou dans des matériaux de revêtement de protection, tels que des garnitures de plafond dans des intérieurs d'automobile ou des éléments de protection pour une protection de tête ou protection de corps, comme un rembourrage de casques ou des garnitures de plafond dans des véhicules.

14. Utilisation d'un casque comprenant la structure composite anisotrope selon l'une quelconque des revendications 1 à 9 ou un revêtement selon la revendication 11 ou 12 pour limiter une accélération et une vitesse de rotation.

15. Procédé de production d'une structure composite anisotrope, le procédé comprenant les étapes consistant à :
- fournir un corps unitaire constitué d'un second matériau cellulaire, le corps unitaire comprenant une pluralité d'évidements à l'intérieur ;
- fournir une pluralité de structures de noyau dans lesdits évidements de telle sorte que ledit corps unitaire agit comme une matrice ou un matériau de support entourant les structures de noyau, de sorte que chaque structure de noyau de la pluralité de structures de noyau comprend un premier matériau cellulaire, chaque structure de noyau de la pluralité de structures de noyau étant configurée sous forme d'une colonne ayant un axe de colonne ;
**caractérisé en ce que** les premier et second matériaux alvéolaires ont, lorsqu'ils sont chargés en compression, un comportement élasto-plastique avec une contrainte plateau, suivi d'une densification et lorsqu'ils sont chargés en cisaillement, présentent un comportement plastique avec une déformation à charge maximale ou une déformation à la rupture supérieure à 8 %, de préférence de plus de 15 %, et **en ce que** le premier matériau cellulaire a une limite de compression et une contrainte plateau plus élevées par comparaison au second matériau cellulaire.
